# FASCICULE DE BREVET EUROPEEN

(11) **EP 4 274 720 B1**
(45) Date de publication et mention de la délivrance du brevet: **25.03.2026**
(21) Numéro de dépôt: 22701298.6
(22) Date de dépôt: 07.01.2022
(51) Int. Cl.: B29B 17/00

(54) **PROCÉDÉ DE RECYCLAGE DE RÉSIDUS SOUS FORME DE PAILLETTES**
VERFAHREN ZUR WIEDERVERWERTUNG VON FLOCKENARTIGEN ABFALLPRODUKTEN
PROCESS FOR RECYCLING WASTE FLAKES

(30) Priorité: 11.01.2021 FR 2100208
(43) Date de publication de la demande: 15.11.2023
(73) Titulaire: Replace, 57000 Metz (FR)
(72) Inventeur: VILLEMIN, Laurent Robert, 57140 Woippy (FR); HORN, Christian, 9991 Weiswampach (LU); HERMANT, Etienne, 51000 Châlons-en-Champagne (FR)
(74) Mandataire: Grosfillier, Philippe
(86) Numéro de dépôt international: PCT/EP2022/050273
(87) Numéro de publication internationale: WO 2022/148841

(56) Documents cités:
- WO-A1-89/02816
- CA-C- 1 318 757
- GB-A- 2 213 763
- US-A- 4 187 352

## Description

La présente invention concerne le domaine du recyclage des déchets. Plus précisément, la présente invention concerne un procédé permettant de transformer une matière première qui se présente sous forme de broyés ou de granulés de plastiques multi-composants en des pièces 3D pleines ou creuses et cela sans recourir à un tri préalable de la matière première.

### Technique antérieure

La publication FR 2 428 518 présente un procédé pour transformer une matière synthétique thermoplastique, en particulier des déchets synthétiques thermoplastiques non triés, en un article ayant les propriétés de travail et de mise en œuvre du bois. Dans ce document, le but de l'invention décrite est de proposer un procédé pour transformer une matière synthétique thermoplastique en article mis en forme, dans lequel un appareil résistant à la pression n'est pas nécessaire mais au contraire on utilise des appareils et des matrices ou moules non résistants à la pression et disponibles dans le commerce.

Dans FR 2 428 518 on propose un procédé pour transformer une matière synthétique thermoplastique, en particulier des déchets synthétiques thermoplastiques non triés, en un article ayant les propriétés de travail et de traitement du bois, dans lequel la matière synthétique est soumise à une opération de mélan-geage dans un fourreau comprenant un organe à vis, est rendue fluide, est moulée, est refroidie dans le moule et est extraite du moule, caractérisé par le fait que la matière synthétique alimente un appareil d'extrusion sans grille-écran et sans filière d'extrusion et y est maintenue jusqu'à l'obtention d'une matière qui est rendue fluide par l'augmentation de la température, cette matière contenant un gaz quand elle quitte l'appareil d'extrusion et passant alors dans un moule qui est ouvert à ses extrémités opposées, dont l'une est raccordée à la sortie de l'appareil d'extrusion.

Le procédé selon FR 2 428 518 peut être exécuté par l'utilisation de tout appareil d'extrusion à vis connu disponible dans le commerce qui peut être du type adiabatique ou du type normal mais dont les éléments générateurs de la pression (aboutissant normalement à des pressions de 100-450 kg/cm²), c'est-à-dire que le paquet de tamis ou l'échangeur et la filière d'extrusion doivent être enlevés. L'extrudeuse du type à vis est ainsi essentiellement un transporteur à vis, approximativement comme un hache-viande. L'opération de moulage qui, dans le procédé selon FR 2 428 518, s'effectue dans une phase séparée, doit se faire dans un moule ouvert. Comme la matière à mouler est introduite sans pression, on peut utiliser des tubes de simple qualité courante à section ronde ou rectangulaire pour faire, par exemple, des poteaux ou poutres ronds ou rectangulaires. La pression de remplissage du moule est fournie dans le procédé selon l'invention par le gaz de moulage disponible dans la matière fluide à mouler. On obtient le gaz de moulage en munissant la matière synthétique divisée, destinée à alimenter l'extrudeuse, d'un agent gonflant dont la température de seuil est dépassée par la température établie dans !'extrudeuse. Des agents gonflants convenables sont, par exemple, des agents gonflants granulés solides ayant une température de seuil de 150-270°C, par exemple l'azodicarbonamide (200°C), le diphénylsulfone-3,3' disulfonyl hydrazide (150°C), le β-β-oxy-bis(benzene-sulfonyl semicarbazide) (210° C). La proportion d'agent gonflant peut être déterminée par essais et elle dépend entre autres de la forme du produit final et des propriétés de la matière thermoplastique Des proportions convenables vont de 0,4 à 1,2 %, calculées sur le poids du mélange de matière thermoplastique et d'agent gonflant.

Dans cette publication, quand on utilise un gaz comme gaz de moulage, par exemple de l'azote ou de l'air, ce gaz est amené à l'extrudeuse après que la matière synthétique thermoplastique a été rendue fluide.

Le procédé selon FR 2 428 518 a beaucoup d'avantages notamment il n'est pas critique. En utilisant des moyens de commande existants d'extrudeuses à vis normales disponibles dans le commerce, on peut contrôler facilement tout le traitement. Comme une extrudeuse du type adiabatique a des dimensions plus faibles, ce type est préféré parce qu'il entraîne une dépense moindre. Comme on n'utilise pas de paquet de tamis dans l'extrudeuse à vis, il n'y a pratiquement aucun risque d'obstruction de l'appareil, de sorte que la matière de résine synthétique thermoplastique à traiter n'a pas besoin d'être préalablement lavée ou épurée. Le procédé selon FR 2 428 518 est également peu critique en ce qui concerne la composition de la matière de départ, même au point que des mélanges de matières de résine synthétique thermoplastique différentes non triées peuvent être traitée de façon satisfaisante. Comme il n'y a pas de pression établie dans l'appareil dans lequel s'accomplit le procédé selon l'invention, l'appareil n'a pas besoin de répondre à des exigences spéciales, par exemple en ce qui concerne la géométrie de la vis. Les moules n'ont pas besoin non plus de répondre à des exigences spéciales en ce qui concerne la résistance à la pression, de sorte qu'on peut utiliser des moules de qualité commerciale courante. GB2213763A décrit un autre état de l'art connu.

### Exposé de l'invention

L'un des buts de l'invention est d'améliorer les procédés connus.

Plus particulièrement, un but de l'invention est de proposer un procédé permettant le recyclage de matières provenant de déchets.

Dans le cadre de la présente invention et selon des modes d'exécution de celle-ci, on a développé un procédé et une unité de production permettant de transformer des broyés ou des granulés de plastiques multi-composants (nommées de façon générale "paillettes" dans la suite de la présente description) en pièce 3D pleines ou creuses, par exemple de section comprise entre 1cm² et 1'600cm², de préférence entre 4cm² et 200cm² et de longueur de 0.3m à 10m et de préférence de 0.5m à 6m. Ces valeurs sont bien entendu indicatives et non limitatives.

Les matières utilisées et présentes dans ces broyés ou granulés sont principalement à base de matières plastiques mélangées avec d'autres matériaux : par exemple Aluminium ou autres métaux, encres, vernis, colles, bois, fibres de verre ou d'autres natures encore comme décrit dans la présente demande. La part de plastique est de l'ordre de 30% à 100%, de préférence de 40% à 90% en volume environ.

Dans le cadre de la présente invention, on effectue l'injection de la matière extrudée sous une pression élevée, par exemple de l'ordre de 50bar à 2000bar, de préférence entre 100bar et 1500bar. Cette pression élevée permet une grande longueur d'écoulement dans le moule qui est facilitée par une lubrification de la matière comme expliqué ci-dessous.

Les innovations techniques du procédé permettent cette transformation en continu à des débits entre 0.05m³/h et 2m³/h et de préférence entre 0,1m³/h et 1m³/h, et donc à des coûts de production inférieurs aux coûts de production des process classiques d'extrusion et d'injection plastique.

Les produits fabriqués par le procédé selon l'invention sont eux-mêmes considérés recyclables car réutilisables à travers le même procédé après un simple broyage pour en former des paillettes.

La présente invention sera mieux comprise à l'aide de la description ci-dessous de modes d'exécution de celle-ci et des revendications. Dans celles-ci, des modes d'exécution de l'invention sont définis par les revendications indépendantes, et les revendications dépendantes définissent des modes d'exécution particuliers.

Selon des modes d'exécution de l'invention, on utilise comme matière première des résidus broyés de produits divers. Typiquement, les matières utilisées sont principalement à base polyoléfine mélangés avec d'autres matériaux: par exemple métal comme de l'aluminium, encres, vernis, colles, bois, fibres de verre ou d'autres natures. Par exemple, ces résidus sont composés de tubes d'emballage comprenant une couche barrière. Ces tubes sont broyés et forment cette matière première qui est utilisée sans tri préalable.

Dans le cadre de la présente invention, on effectue l'injection de la matière extrudée sous une pression élevée, comme par exemple décrit ci-dessus de 50bar à 2'000bar. Cette pression élevée permet une grande longueur d'écoulement dans le moule qui est facilitée par une lubrification de la matière résultant de cette pression élevée.

Selon un autre aspect de la présente invention, on effectue le procédé sans dégazage de la matière extrudée ou bien en effectuant un dégazage partiel de la matière, le but étant d'utiliser les gaz générés par la matière. En effet, dans l'état de la technique, il est habituel d'ajouter un gaz dans le moule ou bien des agents moussants spécifique dans la matière extrudée pour compenser le retrait de matière lors du refroidissement dans le moule. Dans le cadre de la présente invention, on s'est aperçus de façon surprenante que l'on pouvait se passer de cet ajout de gaz ou d'agents et que l'on pouvait profiter au contraire de la présence de certains matériaux dans les résidus qui eux-mêmes vont générer des gaz lors de leur chauffage pour l'extrusion et utiliser ces gaz pour éviter le retrait. Par exemple, des gaz peuvent être générés par des encres et/ou des vernis et/ou des colles et/ou d'autres produits présents dans ou sur la matière utilisée pour former les paillettes.

Dans un autre aspect de l'invention, on peut aussi ajouter des fibres dans la matière afin d'augmenter la rigidité des pièces produites par le procédé. Cet ajout peut se faire à différents moments (comme par exemple en début ou fin d'extrusion) comme décrit ci-dessous et les fibres sont par exemple des fibres de verre, des fibres végétales (chanvre etc.) fibres de coton etc.

Dans des modes d'exécution l'invention concerne un procédé de recyclage de résidus sous forme de paillettes contenant des matières à base matières plastiques, caractérisé en ce qu'il comprend les étapes suivantes:
- on prend des paillettes;
- on compacte les paillettes et on alimente un outil de plastification;
- on fait fondre et on mélange lesdites paillettes dans l'outil de plastification;
- on injecte sous haute pression la matière extrudée dans un moule pour former une pièce;
- on utilise les gaz de décomposition générés par le chauffage et la mise en pression de la matière recyclée dans l'outil de plastification pour lubrifier la matière lors de son injection dans le moule et pour compenser le retrait de matière lors du refroidissement sans apport de gaz supplémentaire;
- on refroidit le moule;
- on extrait la pièce du moule.

Dans des modes d'exécution les paillettes peuvent être issues d'au moins deux sources de matières recyclées.

Dans des modes d'exécution une première source génère des gaz de décomposition de préférence à une température supérieure à 60°C.

Dans des modes d'exécution la première source comprend de préférence des matières à base de résines plastiques.

Dans des modes d'exécution la deuxième source contient de préférence des charges telles que des fibres ou particules d'aluminium, des métaux, des fibres, des encres, des adhésifs, des vernis, des charges minérales, des huiles, des résidus du produit emballé et des résidus de lavage. D'autres matières équivalentes sont possibles.

Dans des modes d'exécution la deuxième source comprend des tubes de dentifrice et/ou des coiffes de bouteilles de champagne et/ou des pare-chocs et/ou des planches de bord d'automobiles.

Dans des modes d'exécution on alimente de préférence simultanément des paillettes de différentes sources à une entrée de l'outil de plastification.

Dans des modes d'exécution on alimente de préférence successivement des paillettes de différentes sources dans l'outil de plastification.

Dans des modes d'exécution on alimente de préférence également successivement des paillettes de différentes sources dans l'outil de plastification.

Dans des modes d'exécution la densité apparente des paillettes est de préférence entre 0.1 et 2.

Dans des modes d'exécution l'on injecte la matière fondue dans un moule de préférence à un débit de 0.1m³/h à 10m³/h.

Dans des modes d'exécution l'on injecte la matière fondue dans un moule sous une pression de préférence de l'ordre de 50bar à 2000bar.

Dans des modes d'exécution on effectue un dégazage partiel de la matière extrudée.

Dans des modes d'exécution on effectue un dégazage de la pièce après son extraction du moule.

Dans des modes d'exécution l'invention concerne une pièce obtenue selon un procédé tel que défini dans la présente demande.

Dans des modes d'exécution la pièce obtenue comprend des matières issues d'au moins une source de matières recyclées

Dans des modes d'exécution la source comprend des matières à base de résines synthétiques.

Dans des modes d'exécution les matières utilisées sont par exemple principalement à base de polyéthylène ou polyoléfine mélangés avec d'autres matériaux comme du métal, des encres, des vernis, des colles, du bois, des fibres de verre ou des tubes d'emballage comprenant une couche barrière.

Dans des modes d'exécution la deuxième source comprend des charges telles que des fibres ou particules d'aluminium, des métaux, des fibres, des encres, des adhésifs, des vernis, des charges minérales, des huiles, des résidus du produit emballé et des résidus de lavage, des tubes de dentifrice et/ou des coiffes de bouteilles de champagne et/ou des pare-chocs et/ou des planches de bord d'automobiles.

Dans des modes d'exécution la pièce obtenue est par exemple un objet comme un poteau, un piquet, un profilé, un tuteur, une planche ou un autre objet équivalent.

### Brève description des dessins

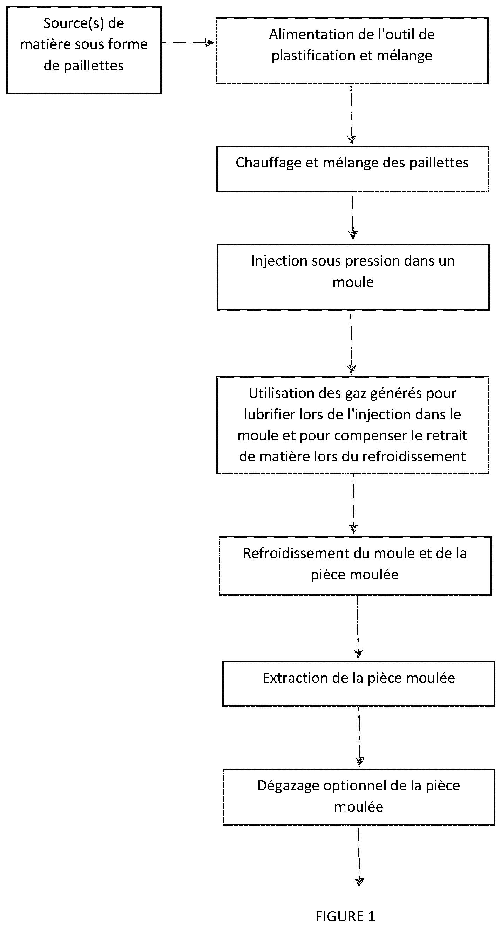

La figure 1 illustre un schéma-bloc d'un mode d'exécution de l'invention.
La figure 2A illustre un exemple d'un objet obtenu par le procédé selon l'invention et les figures 2B à 2E illustrent des exemples de coupes perpendiculaires à l'axe longitudinal dudit objet.

### Description détaillée de l'invention

Dans le cadre de la présente invention, on utilise directement des déchets d'objets en matières plastiques, nettoyés ou non, et broyés sous formes de paillettes dont la densité apparente en vrac est comprise entre 0.1 et 2 et de préférence entre 0.2 et 1.5. Du fait de leur faible densité apparente, il est difficile d'utiliser directement ces paillettes de matière recyclée dans les procédés classiques d'extrusion ou d'injection de résine thermoplastique. Le procédé développé selon l'invention comprend donc de préférence une première phase de compactage ou de forçage des plaquettes de matière recyclée afin d'augmenter leur densité apparente lors de leur alimentation dans le procédé de plastification.

Dans le cadre de l'invention, on utilise avantageusement des déchets d'objets plastiques issus de sources différentes. Le mélange de déchets plastiques issus de source différentes et dans des proportions contrôlées présente de nombreux avantages comme décrit dans la présente demande.

Un premier avantage de l'invention est de permettre un ajustement rapide des proportions du mélange en fonction de la production à effectuer et des propriétés désirées du produit obtenu par le procédé. Par exemple, l'invention permet d'ajuster le module de rigidité de l'objet, sa résistance au stress cracking, sa densité, sa résistance aux impacts, sa dureté ou encore sa résistance thermique en agissant sur la matière première utilisée. A cet effet, des sources de déchets recyclés différentes sont privilégiées. Dans le procédé, la première source comprend essentiellement des matières à base de résines plastiques. Une première source de déchets avantageusement utilisée se compose essentiellement du polyéthylène, comme par exemple des emballages multicouches plastique-aluminium ou des plastiques de différentes natures qui ne se mélangent pas (p.ex. mix PE-PET, PP-PET). Bien entendu, d'autres premières sources de matières équivalentes sont possibles. Une seconde source avantageusement utilisée dans des modes d'exécution de l'invention contient des particules métalliques et/ou fibreuses comme par exemple des particules d'aluminium et/ou des fibres de verre. Selon l'invention, la deuxième source contient des charges telles que des fibres ou particules d'aluminium, des métaux, des fibres, des encres, des adhésifs, des vernis, des charges minérales, des huiles, des résidus du produit emballé et des résidus de lavage ou d'autres charges équivalentes. Un exemple non-limitatif de deuxième source de déchet contenant des particules d'aluminium est le tube pour dentifrice avec une structure multicouche plastique-aluminium. Un autre exemple non-limitatif de deuxième source est les coiffes de bouteille de champagne. Comme source de déchets fibreux, on peut utiliser les matériaux de purge utilisés en injection ou encore des déchets issus de l'industrie automobile comme des pare-chocs, des planches de bord, par exemple.

Un deuxième avantage de l'invention découlant de l'usage de déchets plastiques issus de plusieurs sources est un effet inattendu, présentant un grand intérêt à la fois pour le procédé lui-même de fabrication des objets recyclés, mais aussi pour la qualité esthétique des objets réalisés. En effet, il a été constaté que certains déchets ou composants présents dans ou sur les déchets et paillettes avaient une propension à générer des gaz dans le procédé de fabrication des objets recyclés. Dans l'industrie de mise en œuvre des matières plastiques, ces gaz issus d'un mécanisme de décomposition involontaire sous l'effet de la chaleur sont habituellement séparés de la résine avant fabrication de l'objet. Cette étape de séparation est mise en œuvre en particulier dans les procédés dits "de compoundage" qui permettent de formuler les résines thermoplastiques en ajoutant des charges par exemple ou en effectuant des mélanges de polymère. Dans ces procédés de compoundage, un dégazage est effectué pendant ou après le mélange afin d'extraire les gaz issus de la décomposition.

Dans le procédé selon l'invention, on cherche au contraire à conserver ces gaz, ou au moins une partie de ces gaz, issus de la décomposition pour l'effet bénéfique qu'ils apportent dans le procédé. Un premier effet bénéfique est la réduction de la viscosité du produit injecté dans le moule, car ces produits de décomposition sont à l'état liquide lorsqu'ils sont soumis aux pressions élevées dans l'outil de plastification et d'injection. Ces pressions sont typiquement comprises entre 100bar et 1000bar. Ces produits de décomposition restent à l'état liquide lorsque la pression est supérieure à quelques bars, par exemple environ 5bar. En conséquence, il y a un grand intérêt à conserver ces produits de décomposition dans le produit transformé car leur faible viscosité à l'état liquide permet de lubrifier les chaines de polymère et diminuer de façon significative la viscosité de la matière. Cet effet a un double bénéfice, à savoir, d'une part, la réduction de l'énergie consommée pour la fabrication desdits objets recyclés et, d'autre part, la possibilité de de fabriquer des objets de grande longueur avec une section réduite (comme des piquets, poteaux, profilés etc.).

Le deuxième effet bénéfique des produits de décomposition est lié au changement d'état de liquide à gaz dès que la pression diminue suffisamment. En conséquence, et contrairement aux publications de l'art antérieur qui proposent d'ajouter des agents gonflants, l'invention utilise avantageusement les produits de décomposition qui se transforment en gaz lorsque l'objet injecté se refroidit: la force d'expansion générée par les gaz est alors utilisée pour compenser la rétraction de la matière moulée lors du refroidissement. Il en résulte des objets moulés de grande qualité visuelle, de grande précision dimensionnelle bien que le temps de cycle soit très réduit et simplifié.

Dans le procédé selon l'invention, le procédé comprend de préférence une étape initiale de forçage des paillettes d'objets recyclés ; l'étape de forçage ayant pour effet d'augmenter la densité apparente à l'état solide des paillettes au moment de l'alimentation dans l'outil de plastification et mélange.

Dans le procédé, on utilise des paillettes en provenance d'au moins une source, ou on procède au mélange en quantité contrôlée de paillettes en provenance d'au moins deux sources différentes, afin d'ajuster les propriétés de la matière injectée en fonction des propriétés d'usage de l'objet fabriqué. L'unique source peut suffire pour former un objet avec les caractéristiques voulues, ou alors il est nécessaire de faire appel à des sources de matières différentes.

Lorsque l'on utilise plus qu'une seule source, une première méthode consiste à alimenter simultanément les paillettes des différentes sources à l'entrée de l'outil de plastification.

Une deuxième méthode consiste à alimenter successivement chaque source de paillette dans l'outil de plastification. Cette deuxième méthode permet de doser chaque produit à l'endroit optimal dans l'outil de plastification. Par exemple, il peut être avantageux d'incorporer un produit recyclé comportant des fibres dans un premier produit recyclé déjà à l'état fondu afin de limiter la dégradation des fibres.

Une troisième méthode consiste en un mix de la première et deuxième méthode lorsque le nombre de sources est supérieur à 2. Ainsi, on pourrait avoir par exemple les produits 1 et 2 (sources 1 et 2) alimentés simultanément à l'entrée de l'outil de plastification et un produit 3 (source 3) alimenté plus en aval dans l'outil de plastification. Bien entendu, c'est un exemple non-limitatif et on pourrait dans un autre mode d'exécution une alimentation d'une seule source à l'entrée de l'outil et les deux autres sources plus en aval. De multiples combinaison sont donc possibles dans le cadre de la présente invention.

Dans le procédé selon l'invention, l'outil de plastification permet l'incorporation, le mélange et la fusion de produits recyclés provenant d'au moins une source afin d'obtenir in fine une matière fondue homogène et prête à l'injection. Au cours du procédé selon l'invention, les produits de décomposition sont conservés à l'état liquide dans le mélange pendant l'opération de plastification grâce à une pression dans le dispositif maintenue supérieure à 5 bars après fusion.

Dans le procédé selon l'invention la pression sur la matière fondue est au moins de 5bar lors du transfert de la matière depuis l'unité de plastification avant injection.

Dans le procédé selon l'invention, on injecte la matière fondue dans un moule à un débit de 0.1m³/h à 10m³/h et avantageusement de 0.5m³/h à 5m³/h. Du fait du débit important lors de l'injection, le temps de remplissage est faible et la pression dans la matière lors du remplissage du moule reste supérieure à 5bar. De ce fait, les produits de décomposition restent à l'état liquide et jouent un rôle de lubrifiant permettant de diminuer la pression nécessaire pour remplir la cavité. Grâce à ce phénomène, l'invention permet le moulage d'objets de grande longueur d'écoulement ayant une section réduite.

Dans le procédé selon l'invention on remplit des moules refroidis. Après injection, la matière recyclée en se refroidissant dans la cavité du moule se solidifie ce qui provoque une diminution de volume et par conséquent une diminution de la pression à l'intérieur de la matière. Cette diminution de pression permet aux produits de décomposition de passer de l'état liquide à l'état gazeux et de générer une pression "de moussage à coeur" pendant le refroidissement et la solidification de l'objet. Cette pression de moussage crée des cavités réparties à cœur de l'objet dans la partie centrale de l'objet, la partie périphérique étant dépourvue de telles cavités. Selon l'invention, la densité de la partie centrale de l'objet est beaucoup plus faible que la densité de la partie périphérique ce qui apporte de nombreux avantages en termes de masse et propriétés d'usage de l'objet obtenu par le procédé. Un autre avantage de l'invention est l'obtention de pièces recyclées de bonne qualité visuelle du fait de son état de surface et de grande précision dimensionnelle du fait de la compensation des retraits grâce à l'effet de "moussage à cœur".

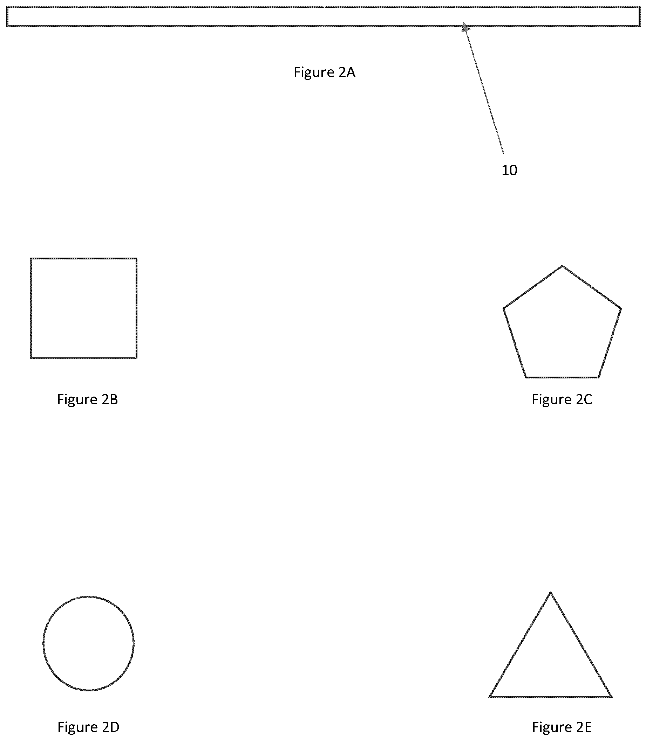

Selon un mode préférentiel de réalisation de l'invention, le procédé est utilisé pour fabriquer des objets 10 allongés pleins ou creux comme des piquets de vigne, des piquets de panneaux de signalisation, des profilés ou autres objets similaires. Des exemples en vue de côté et en coupes perpendiculaires à l'axe longitudinal sont illustrés dans les figures 2A à 2E qui montrent les profils de ces pièces 10. Bien entendu, ce sont des exemples illustratifs et d'autre formes et profils sont possibles dans le cadre de la présente invention.

Un avantage du procédé selon l'invention est lié au fait que les objets produits ne présentent pas de bavures et sont utilisables directement.

De façon générale, selon l'invention, le procédé de recyclage de résidus sous forme de paillettes contenant des matières à base de résines plastiques mélangées avec d'autres matériaux, comme des métaux, des fibres, des encres, des adhésifs, des vernis, des charges minérales, des huiles, des résidus du produit emballé et des résidus de lavage, comprend les étapes suivantes:
- on prend des paillettes;
- on compacte les paillettes
- on fait fondre et on mélange lesdites paillettes dans une extrudeuse (comme outil de mélange et plastification);
- on injecte sous haute pression la matière extrudée dans un moule pour former une pièce;
- on utilise les gaz de décomposition générés par le chauffage et la mise en pression de la matière recyclée dans **l'outil** de plastification pour lubrifier la matière lors de son introduction dans le moule et pour compenser le retrait de matière lors du refroidissement sans apport de gaz supplémentaire;
- on refroidit le moule;
- on extrait la pièce 10 du moule.

Selon des modes d'exécution, le procédé selon l'invention comprend au moins les étapes suivantes :
- Utilisation d'au moins deux sources de matière recyclée ; une première générant des produits de décomposition à une température supérieure à 60°C et de préférence à une température supérieure à 80°C ; et une deuxième contenant des charges tels que des fibres ou particules d'aluminium.
- Transformation des déchets en paillettes de densité apparente comprise entre 0,1 et 2 ; alimentation des paillettes issues des sources respectives dans une proportion contrôlée afin d'obtenir un produit recyclé ayant les propriétés désirées (p.ex. rigidité, stress cracking, densité, résistance aux impacts, dureté, résistance thermique, aspect).
- Forçage des paillettes à l'état solide afin d'augmenter leur densité apparente.
- Plastification et mélange de la matière recyclée grâce à une extrudeuse, les produits issus de la décomposition sont conservés grâce à une pression dans l'extrudeuse supérieure à Sbar lorsque la matière est fondue,
- Injection de la matière fondue dans un moule à un débit de 0.1m³/h à 10m³/h et avantageusement de 0.5m³/h à 5m³/h. Eventuelle phase de compactage après l'injection.
- Refroidissement de la pièce 10 moulée dans le moule : la pression dans le moule diminue, les produits de décomposition changent d'état (liquide - gaz), la pression générée par les gaz de décomposition permet de compenser les retraits de la matière qui se refroidit.
- Démoulage de la pièce 10 moulée qui ne présente pas de retassure ni défaut d'aspect.

Selon des modes d'exécution de la présente invention, on effectue une éventuelle phase de dégazage des objets, réalisée après la fabrication de la pièce moulée ou de l'objet moulé. Cette phase de dégazage a pour effet et avantage de limiter l'émanation de gaz et d'odeurs pendant la durée de vie des objets. La phase de dégazage des objets est réalisée par exemple en stockant les objets moulés dans une enceinte dont la température est comprise entre 40°C et 100°C et de préférence entre 60°C et 80°C et pendant une durée comprise entre 8h et 72h et de préférence entre 12h et 48h.

### EXEMPLES

Les tables 1 à 6 ci-dessous montrent des exemples de compositions de broyés utilisés dans le procédé selon l'invention selon treize essais et huit essais respectivement. Les tables 1 à 3 illustrent respectivement le détail de la composition, la composition en volume et le résultat pour les essais 1 à 13bis. Les tables 4 à 6 illustrent respectivement le détail de la composition, la composition en volume et le résultat pour les essais A à H.

**Table 1**

| N° Essai | PEHD Bouteille Post Conso Colorés | Tubes Dentifrice | Coiffe de Champagne Aluminium épaisseur 70 microns (épaisseur totale 130 microns) | PP issus des Purges d'extrusion de matières recyclés | Fibre de renfort |
|---|---|---|---|---|---|
| 1 | 65% | 22% | | | 13% |
| 1bis | 75% | 25% | | | |
| 2 | | 65% | | 22% | 13% |
| 2bis | | 75% | | 25% | |
| 3 | | 22% | | 65% | 13% |
| 3bis | | 25% | | 75% | |
| 4 | 22% | 65% | | | 13% |
| 4bis | 25% | 75% | | | |
| 5 | | 87% | | | 13% |
| 5bis | | 100% | | | |
| 6 | 65% | | 22% | | 13% |
| 6bis | 75% | | 25% | | |
| 7 | 22% | | 65% | | 13% |
| 7bis | 25% | | 75% | | |
| 8 | | | 87% | | 13% |
| 8bis | | | 100% | | |
| 9 | | 52% | | 35% | 13% |
| 9bis | | 60% | | 40% | |
| 10 | 35% | 52% | | | 13% |
| 10bis | 40% | 60% | | | |
| 11 | | 36% | | 54% | |
| 11bis | | 40% | | 60% | |
| 12 | | 17% | 70% | | 13% |
| 12bis | | 20% | 80% | | |
| 13 | | | 70% | 17% | 13% |
| 13bis | | | 80% | 20% | |

**Table 2**

| N° Essai | Part aluminium | Part PE (PERD, PEBD, LIN....) | Part PP | Adhésifs/ Encres/ Vernis | Fibre | Matériaux divers pollution |
|---|---|---|---|---|---|---|
| 1 | 1.2% | 81.0% | 4.3% | <1% | 13.0% | |
| 1bis | 1.4% | 93.0% | 5.0% | <1% | 0.0% | |
| 2 | 3.5% | 59.0% | 20.0% | <1% | 13.0% | 4.4% |
| 2bis | 4.1% | 67.9% | 23.0% | <1% | 0.0% | 5.0% |
| 3 | 1.2% | 18.7% | 54.0% | <1% | 13.0% | 13.0% |
| 3bis | 1.4% | 21.3% | 62.0% | <1% | 0.0% | 15.0% |
| 4 | 3.5% | 79.0% | 4.3% | <1% | 13.0% | |
| 4bis | 4.1% | 90.0% | 5.0% | <1% | 0.0% | |
| 5 | 4.7% | 75.0% | 5.0% | <2% | 13.0% | |
| 5bis | 5.5% | 86.0% | 6.0% | <2% | 0.0% | |
| 6 | 11.8% | 75.0% | | <1% | 13.0% | |
| 6bis | 13.5% | 86.0% | | <1% | 0.0% | |
| 7 | 35.0% | 51.0% | | <2% | 13.0% | |
| 7bis | 40.4% | 58.0% | | <2% | 0.0% | |
| 8 | 46.8% | 39.0% | | <2% | 13.0% | |
| 8bis | 53.8% | 45.0% | | <2% | 0.0% | |
| 9 | 2.8% | 44.4% | 24.4% | <1% | 13.0% | 7.0% |
| 9bis | 3.3% | 51.0% | 28.0% | <1% | 0.0% | 8.0% |
| 10 | 2.8% | 79.1% | 4.0% | <1% | 13.0% | 0.0% |
| 10bis | 3.3% | 91.0% | 5.0% | <1% | 0.0% | 0.0% |
| 11 | 2.0% | 30.8% | 37.9% | <1% | 13.0% | 10.8% |
| 11bis | 2.2% | 34.0% | 42.0% | <1% | 0.0% | 12.0% |
| 12 | 38.4% | 44.0% | 3.0% | <2% | 13.0% | |
| 12bis | 44.2% | 51.0% | 3.0% | <2% | 0.0% | |
| 13 | 37.4% | 31.0% | 13.9% | <2% | 13.0% | 3.5% |
| 13bis | 43.1% | 35.5% | 16.0% | <2% | 0.0% | 4.0% |

**Table 3**

| N° Essai | Aspect | RIGIDITE |
|---|---|---|
| 1 | Bel Aspect | Rigide |
| 1bis | Bel Aspect | Rigidité Faible |
| 2 | Bel Aspect | Rigidité Moyenne |
| 2bis | Bel Aspect | Rigidité Faible |
| 3 | Bel Aspect | Très Rigide |
| 3bis | Bel Aspect | Rigidité Moyenne |
| 4 | Bel Aspect | Rigidité Moyenne |
| 4bis | Bel Aspect | Rigidité Faible |
| 5 | Bel Aspect | Rigidité Faible |
| 5bis | Bel Aspect | Rigidité très faible |
| 6 | Bel Aspect | Rigide |
| 6bis | Bel Aspect | Rigidité Moyenne |
| 7 | Aspect Correct | Très rigide mais Friable |
| 7bis | Aspect Correct | Rigide mais friable |
| 8 | Aspect Incomplet | Très rigide mais Friable |
| 8bis | Aspect Incomplet | Rigide mais friable |
| 9 | Bel Aspect | Très Rigide |
| 9bis | Bel Aspect | Rigide |
| 10 | Bel Aspect | Rigide |
| 10bis | Bel Aspect | Rigidité moyenne |
| 11 | Bel Aspect | Très rigide |
| 11bis | Bel Aspect | Rigide |
| 12 | Aspect Correct | Très rigide mais Friable |
| 12bis | Aspect Correct | Rigide mais friable |
| 13 | Aspect Correct | Très rigide mais Friable |
| 13bis | Aspect Correct | Rigide mais friable |

**Table 4**

| N° essai | Coiffe de Champagne Aluminium épaisseur 70 microns (épaisseur totale 130 microns) | Coiffe de Champagne Aluminium épaisseur 50 microns (épaisseur totale 74 microns) | PP issus des Purges d'extrusion de matières recyclés | Fibre de renfort |
|---|---|---|---|---|
| A | 25% | | 75% | 0% |
| B | 23% | | 68% | 10% |
| C | 50% | | 50% | 0% |
| D | 45% | | 45% | 10% |
| E | | 25% | 75% | 0% |
| F | | 23% | 68% | 10% |
| G | | 50% | 50% | 0% |
| H | | 45% | 45% | 10% |

**Table 5**

| N° essai | Part aluminium | Part PE (PERD, PEBD, LIN....) | Part PP | Adhésifs/ Encres/ Vernis | Fibre | Matériaux Divers "Pollution" |
|---|---|---|---|---|---|---|
| A | 13.5% | 11.5% | 60.0% | <1% | 0.0% | 15.0% |
| B | 12.1% | 10.4% | 54.0% | <1% | 10.0% | 13.5% |
| C | 26.9% | 23.0% | 40.0% | <1% | 0.0% | 10.0% |
| D | 24.2% | 20.7% | 36.0% | <1% | 10.0% | 9.0% |
| E | 16.9% | 8.0% | 60.0% | <1% | 0.0% | 15.0% |
| F | 15.2% | 7.2% | 54.0% | <1% | 10.0% | 13.5% |
| G | 33.8% | 16.0% | 40.0% | <1% | 0.0% | 10.0% |
| H | 30.4% | 14.4% | 36.0% | <1% | 10.0% | 9.0% |

**Table 6**

| N° essai | Aspect | RIGIDITE |
|---|---|---|
| A | Bon aspect | Rigide |
| B | Bon aspect | Très Rigide |
| C | Bon aspect | Rigide |
| D | Bon aspect | Très Rigide |
| E | Bon aspect | Rigide |
| F | Bon aspect | Très Rigide |
| G | Bon aspect | Rigide |
| H | Bon aspect | Très Rigide |

Les modes d'exécution décrits le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens utilisés dans un mode peuvent être utilisés dans un autre mode.

## Revendications

1. Procédé de recyclage de résidus sous forme de paillettes contenant des matières à base matières plastiques, **caractérisé en ce qu'**il comprend les étapes suivantes:
- on prend des paillettes;
- on compacte les paillettes et on alimente un outil de plastification;
- on fait fondre et on mélange lesdites paillettes dans l'outil de plastification;
- on injecte sous haute pression la matière extrudée dans un moule pour former une pièce;
- on utilise les gaz de décomposition générés par le chauffage et la mise en pression de la matière recyclée dans l'outil de plastification pour lubrifier la matière lors de son injection dans le moule et pour compenser le retrait de matière lors du refroidissement sans apport de gaz supplémentaire;
- on refroidit le moule;
- on extrait la pièce (10) du moule.

2. Procédé selon la revendication 1, **caractérisé en ce que** les paillettes sont issues d'au moins deux sources de matières recyclées.

3. Procédé selon la revendication 2, **caractérisé en ce qu'**une première source génère des gaz de décomposition à une température supérieure à 60°C.

4. Procédé selon la revendication 2 ou 3, **caractérisé en ce que** la première source comprend essentiellement des matières à base de résines plastiques.

5. Procédé selon l'une des revendications 2 à 4, **caractérisé en ce que** la deuxième source contient des charges telles que des fibres ou particules d'aluminium, des métaux, des fibres, des encres, des adhésifs, des vernis, des charges minérales, des huiles, des résidus du produit emballé et des résidus de lavage.

6. Procédé selon l'une des revendications 2 à 5, **caractérisé en ce que** la deuxième source comprend des tubes de dentifrice et/ou des coiffes de bouteilles de champagne et/ou des pare-chocs et/ou des planches de bord d'automobiles.

7. Procédé selon l'une des revendications 2 à 6, **caractérisé en ce que** on alimente simultanément des paillettes de différentes sources à une entrée de l'outil de plastification.

8. Procédé selon l'une des revendications 2 à 6, **caractérisé en ce que** on alimente successivement des paillettes de différentes sources dans l'outil de plastification.

9. Procédé selon l'une des revendications 2 à 7, **caractérisé en ce que** on alimente également successivement des paillettes de différentes sources dans l'outil de plastification.

10. Procédé selon l'une des revendications précédentes, **caractérisé en ce que** la densité apparente des paillettes entre 0.1 et 2.

11. Procédé selon l'une des revendications précédentes, **caractérisé en ce que** l'on injecte la matière fondue dans un moule à un débit de 0.1m³/h à 10m³/h.

12. Procédé selon l'une des revendications précédentes, **caractérisé en ce que** l'on injecte la matière fondue dans un moule sous une pression de l'ordre de 50bar à 2000bar.

13. Procédé selon l'une des revendications précédentes, dans lequel on effectue un dégazage partiel de la matière extrudée.

14. Procédé selon l'une des revendications précédentes, dans lequel on effectue un dégazage de la pièce (10) après son extraction du moule.

15. Procédé selon l'une des revendications précédentes, dans lequel la pièce est un poteau ou un piquet ou un profilé ou un tuteur ou une planche.

## Patentansprüche

1. Verfahren zur Verwertung von Reststoffen in Form von Flocken, die Materialien auf Kunststoffbasis enthalten, **dadurch gekennzeichnet, dass** es die folgenden Schritte umfasst:
- Annehmen der Flocken;
- Pressen der Flocken und Zuführen zu einem Plastifizierungswerkzeug;
- Schmelzen und Mischen der Flocken in dem Plastifizierungswerkzeug;
- Spritzen des extrudierten Materials unter hohem Druck in eine Form, um ein Teil zu bilden;
- Verwenden der Zersetzungsgase, die durch das Erhitzen und das Druckbeaufschlagen des verwerteten Materials in dem Plastifizierwerkzeug erzeugt werden, um das Material bei seinem Einspritzen in die Form zu schmieren und um den Materialschwund beim Abkühlen ohne Zufuhr von zusätzlichem Gas auszugleichen;
- Abkühlen der Form;
- Entnehmen des Teils (10) aus der Form.

2. Verfahren nach Anspruch 1, **dadurch gekennzeichnet, dass** die Flocken aus mindestens zwei Quellen von verwerteten Materialien stammen.

3. Verfahren nach Anspruch 2, **dadurch gekennzeichnet, dass** eine erste Quelle Zersetzungsgase bei einer Temperatur über 60 °C erzeugt.

4. Verfahren nach Anspruch 2 oder 3, **dadurch gekennzeichnet, dass** die erste Quelle im Wesentlichen Materialien auf Kunststoffharzbasis umfasst.

5. Verfahren nach einem der Ansprüche 2 bis 4, **dadurch gekennzeichnet, dass** die zweite Quelle Füllstoffe wie Aluminiumfasern oder -partikel, Metalle, Fasern, Tinten, Klebstoffe, Lacke, mineralische Füllstoffe, Öle, Reststoffe des verpackten Produkts und Waschreststoffe enthält.

6. Verfahren nach einem der Ansprüche 2 bis 5, **dadurch gekennzeichnet, dass** die zweite Quelle Zahnpastatuben und/oder Champagnerflaschenkapseln und/oder Stoßstangen und/oder Armaturenbretter von Kraftfahrzeugen umfasst.

7. Verfahren nach einem der Ansprüche 2 bis 6, **dadurch gekennzeichnet, dass** Flocken aus verschiedenen Quellen einem Einlass des Plastifizierungswerkzeugs gleichzeitig zugeführt werden.

8. Verfahren nach einem der Ansprüche 2 bis 6, **dadurch gekennzeichnet, dass** Flocken aus verschiedenen Quellen in dem Plastifizierungswerkzeug sukzessive zugeführt werden.

9. Verfahren nach einem der Ansprüche 2 bis 7, **dadurch gekennzeichnet, dass** Flocken aus verschiedenen Quellen in dem Plastifizierungswerkzeug ebenfalls sukzessive zugeführt werden.

10. Verfahren nach einem der vorhergehenden Ansprüche, **dadurch gekennzeichnet, dass** die Schüttdichte der Flocken zwischen 0,1 und 2 ist.

11. Verfahren nach einem der vorhergehenden Ansprüche, **dadurch gekennzeichnet, dass** das geschmolzene Material mit einem Volumenstrom von 0,1 m³/h bis 10 m³/h in eine Form gespritzt wird.

12. Verfahren nach einem der vorhergehenden Ansprüche, **dadurch gekennzeichnet, dass** das geschmolzene Material unter einem Druck in der Größenordnung von 50 bar bis 2000 bar in eine Form gespritzt wird.

13. Verfahren nach einem der vorhergehenden Ansprüche, wobei eine Teilentgasung des extrudierten Materials vorgenommen wird.

14. Verfahren nach einem der vorhergehenden Ansprüche, wobei eine Entgasung des Teils (10) nach seinem Entnehmen aus der Form vorgenommen wird.

15. Verfahren nach einem der vorhergehenden Ansprüche, wobei das Teil ein Pfosten oder ein Pflock oder ein Profil oder ein Stützpfahl oder ein Brett ist.

## Claims

1. Method for recycling waste in the form of flakes containing plastics-based materials, **characterized in that** it comprises the following steps:
- taking up the flakes;
- compacting the flakes and feeding them into a plasticizing tool;
- melting and mixing said flakes in the plasticizing tool;
- injecting the extruded material under high pressure into a mould to form a part;
- using the decomposition gases generated by the heating and pressurizing of the recycled material in the plasticizing tool to lubricate the material as it is injected into the mould and to compensate for the shrinkage of material during cooling, without supplying additional gas;
- cooling the mould;
- removing the part (10) from the mould.

2. Method according to Claim 1, **characterized in that** the flakes come from at least two sources of recycled materials.

3. Method according to Claim 2, **characterized in that** a first source generates decomposition gases at a temperature higher than 60°C.

4. Method according to Claim 2 or 3, **characterized in that** the first source substantially comprises plastic resin-based materials.

5. Method according to one of Claims 2 to 4, **characterized in that** the second source contains fillers such as aluminium fibres or particles, metals, fibres, inks, adhesives, varnishes, mineral fillers, oils, packaged product waste and washing waste.

6. Method according to one of Claims 2 to 5, **characterized in that** the second source comprises toothpaste tubes and/or champagne bottle caps and/or motor vehicle bumpers and/or dashboards.

7. Method according to one of Claims 2 to 6, **characterized in that** flakes from various sources are fed simultaneously to an inlet of the plasticizing tool.

8. Method according to one of Claims 2 to 6, **characterized in that** flakes from various sources are fed successively into the plasticizing tool.

9. Method according to one of Claims 2 to 7, **characterized in that** flakes from various sources are also fed successively into the plasticizing tool.

10. Method according to one of the preceding claims, **characterized in that** the apparent density of the flakes is between 0.1 and 2.

11. Method according to one of the preceding claims, **characterized in that** the molten material is injected into a mould at a flow rate of 0.1 m³/h to 10 m³/h.

12. Method according to one of the preceding claims, **characterized in that** the molten material is injected into a mould at a pressure of the order of 50 bar to 2000 bar.

13. Method according to one of the preceding claims, in which a partial degassing of the extruded material is carried out.

14. Method according to one of the preceding claims, in which a degassing of the part (10) is carried out after its removal from the mould.

15. Method according to one of the preceding claims, in which the part is a post or a pole or a profile or a stake or a board.
